# EUROPÄISCHE PATENTSCHRIFT

(11) **EP 2 715 205 B1**
(45) Veröffentlichungstag und Bekanntmachung des Hinweises auf die Patenterteilung: **19.04.2017**
(21) Anmeldenummer: 12723691.7
(22) Anmeldetag: 25.05.2012
(51) Int. Cl.: F16L 47/02

(54) **KONNEKTOR ZUR FLUIDDICHTEN VERBINDUNG MINDESTENS ZWEIER FLUIDFÜHRENDER KOMPONENTEN SOWIE FLUIDTRANSFER-BAUGRUPPE MIT MINDESTENS EINEM DERARTIGEN KONNEKTOR**
CONNECTOR FOR FLUID-TIGHT CONNECTION OF AT LEAST TWO FLUID-CARRYING COMPONENTS, AND FLUID TRANSFER ASSEMBLY HAVING AT LEAST ONE SUCH CONNECTOR
RACCORD PERMETTANT UN RACCORDEMENT ÉTANCHE AUX FLUIDES D'AU MOINS DEUX ÉLÉMENTS D'ACHEMINEMENT DE FLUIDE ET ENSEMBLE DE TRANSFERT DE FLUIDES COMPORTANT UN TEL RACCORD

(30) Priorität: 03.06.2011 DE 102011076938
(43) Veröffentlichungstag der Anmeldung: 09.04.2014
(73) Patentinhaber: Raumedic AG, 95213 Münchberg (DE)
(72) Erfinder: PRESCHER, Jörg, 97729 Ramsthal (DE)
(74) Vertreter: Rau, Schneck & Hübner Patentanwälte Rechtsanwälte PartGmbB
(86) Internationale Anmeldenummer: PCT/EP2012/059814
(87) Internationale Veröffentlichungsnummer: WO 2012/163819

(56) Entgegenhaltungen:
- WO-A1-2008/054227
- US-A- 2 283 975
- US-A- 3 494 639
- US-A- 3 857 588

## Beschreibung

Die Erfindung betrifft einen Konnektor zur fluiddichten Verbindung mindestens zweier fluidführender Komponenten. Ferner betrifft die Erfindung eine Fluidtransfer-Baugruppe mit mindestens einem derartigen Konnektor.

Derartige Konnektoren, insbesondere für medizinische Anwendungen, sind bekannt aus der WO 2007/048072 A2 und der US 6 290 265 B1. Bei der WO 2007/048072 A2 erfolgt ein Umspritzen oder ein Verkleben von Verbindungsabschnitten fluidführender Komponenten mit Einführabschnitten im Konnektor-Grundkörper im Bereich zueinander komplementär ausgeformter Wandabschnitte. Bei der US 6 290 265 B1 erfolgt ein Umspritzen der Verbindungsabschnitte der fluidführenden Komponenten unter Einsatz einer verlorenen Form, also eines eine Fluidpassage definierenden inneren Formkörpers, der nachträglich entfernt werden muss. Aus der DE 28 42 227 A1 ist eine Vorrichtung in Form eines hülsenförmigen Verbindungselements zum Verbinden zweier Rohrenden bekannt. Die US 3 494 639 A, WO 2008/054 227 A1, US 2 283 975 A und US 3 857 588 A offenbaren ferner jeweils Konnektoren zur Verbindung schlauchartiger oder rohrförmiger Komponenten, wobei die Konnektoren jeweils Einführabschnitte zum Einführen der fluidführenden Komponenten aufweisen.

Es ist eine Aufgabe der vorliegenden Erfindung, einen Konnektor sowie eine einen derartigen Konnektor aufweisende Fluidtransfer-Baugruppe derart weiterzubilden, dass eine möglichst einfache und kostengünstige, gleichzeitig aber sichere fluiddichte, also gasdichte und/oder flüssigkeitsdichte, Verbindung des Konnektors mit den fluidführenden Komponenten gewährleistet ist.

Diese Aufgabe ist erfindungsgemäß gelöst durch einen Konnektor mit den im Anspruch 1 angegebenen Merkmalen und durch eine Fluidtransfer-Baugruppe mit den im Anspruch 8 angegebenen Merkmalen.

Erfindungsgemäß wurde erkannt, dass es zur Herstellung einer einfachen, kostengünstigen und gleichzeitig sicheren fluiddichten Verbindung von Vorteil ist, wenn die Einführabschnitte mit sich nach innen zu einer Fluidpassage des Konnektor-Grundkörpers hin größer werdenden Erweiterungen ausgeführt sind. Die Einführabschnitte erweitern sich dabei zu der Fluidpassage innerhalb des Konnektor-Grundkörpers nach innen hin über eine sich konisch erweiternde Innenwand. Diese konische Erweiterung der Einführabschnitte erstreckt sich weitläufig ausgehend von einer Einführöffnung bis hin zu einer Verengungsstufe, über welche die Einführabschnitte in die Fluidpassage übergehen. Hierdurch ergibt sich mit den einzuführenden fluidführenden Komponenten in der Regel gerade keine komplementäre Gestaltung der zu verbindenden Flächen, also einer Innenwand des Einführabschnitts einerseits und einer Außenwand eines Verbindungsabschnitts der fluidführenden Komponente andererseits. Die aufgrund der Erweiterung der Einführabschnitte vorliegende Abweichung von der komplementären Gestaltung ergibt zwischen der fluidführenden Komponente einerseits und der Innenwand des Einführabschnitts andererseits ein Reservoir beziehungsweise einen Ringraum, in dem beispielsweise eine definierte Menge eines Verbindungsklebers untergebracht werden kann. Die konische Erweiterung der Einführabschnitte von einer Einführöffnung bis zu einer Verengungsstufe ist in der Herstellung günstig und ergibt ein definiertes Ringraum-Volumen zwischen einer Außenwand des eingeführten Verbindungsabschnitts der fluidführenden Komponente und der Innenwand des Einführabschnitts. Dieser definiert vorliegende Raum kann beispielsweise verhindern, dass Klebstoff unerwünscht von der eingeführten fluidführenden Komponente hin zur Fluidpassage im Konnektor-Grundkörper gedrückt wird und dort eine unterwünschte Kontamination verursacht. Aufgrund der Erweiterung ist zudem eine Gestaltung möglich, bei der der Einführabschnitt nur bereichsweise an einer Außenwand des Verbindungsabschnitts der eingeführten fluidführenden Komponente anliegt. Dies erleichtert das Einführen der fluidführenden Komponente und kann trotzdem einen ausreichenden Reibschluss zur Fixierung der eingeführten fluidführenden Komponente gegen ein unerwünschtes Herausrutschen während des Verbindungsvorganges gewährleisten. Beim Verbinden des Konnektors mit den mindestens zwei fluidführenden Komponenten kann der Konnektor-Grundkörper zumindest im Bereich von Einführöffnungen der Einführabschnitte aufgeweitet werden. Dieses Aufweiten kann mittels Lösungsmittel-Quellen des Konnektor-Grundkörpers oder auch durch mechanisches Aufweiten geschehen. Ein durch diese reversible Aufweitung und anschließend wieder erfolgende Verengung der Einführöffnung erzeugter Durchmesserhub der Einführöffnung kann das Einführen des Verbindungsabschnitts der fluidführenden Komponente erleichtern. Zudem kann ein definierter Reibschluss des Konnektor-Grundkörpers mit dem jeweiligen Verbindungsabschnitt der fluidführenden Komponente im Bereich einer außen am Verbindungsabschnitt anliegenden Berandung der Einführöffnung erreicht werden. Schließlich kann über diese reversible Aufweitung eine Fertigungstoleranz einerseits des Konnektor-Grundkörpers und/oder andererseits der fluidführenden Komponenten ausgeglichen werden. Eine Verbindung des Konnektors mit den mindestens zwei fluidführenden Komponenten ist aufgrund reproduzierbarer Spaltbedingungen zwischen den Außenwänden der Verbindungsabschnitte und den Innenwänden der Einführabschnitte sicher und, da kein Umspritzen mit verlorener Form erforderlich ist, unaufwändig. Der Konnektor kann aus Kunststoff, insbesondere aus Silikon oder aus Polyurethan bestehen. Mantelwandabschnitte des Konnektors können längs einer Einführachse eine variierende Wandstärke aufweisen. Die Wandstärke kann sich in Einführrichtung vergrößern, kann sich in Einführrichtung verkleinern oder kann in Einführrichtung einen oder mehrere Extremwerte haben. Ferner kann die Wandstärke eine unstetige Abhängigkeit von einer axialen Position des betrachteten Wandabschnitts, beispielsweise eine sich stufenweise verändernde Wandstärke aufweisen. Ein Außendurchmesser der fluidführenden Komponeten ist etwas größer als der Innendurchmesser der Fluidpassage, sodass der stirnseitige und in den Einführabschnitt eingeschobene Verbindungsabschnitt der fluidführenden Komponenten an der Verengungsstufe anstößt. Die Verengungsstufe dient daher auch als Anschlag für die fluidführenden Komponenten.

Eine Erweiterung aller Einführabschnitte des Konnektors nach Anspruch 2 ermöglicht es, eine gesamte Fluidtransfer-Baugruppe einfach und kostengünstig und dabei gleichzeitig sicher fluiddicht zu verbinden.

Ein Konuswinkel nach Anspruch 3 hat sich als vorteilhaft herausgestellt. Der Konuswinkel kann im Bereich zwischen 20° und 30° liegen und kann insbesondere 25° betragen.

Eine Ausgestaltung der Mantelwand des mindestens einen Einführabschnitts nach Anspruch 4 kann zur Vorgabe einer Stabilität des Einführabschnittes genutzt werden. Dieser kann beispielsweise im Bereich der Einführöffnung gezielt weich gestaltet sein. Auch im Bereich der Verengungsstufe kann durch eine solche Gestaltung der Mantelwand gezielt eine Schwächung des Konnektor-Grundkörpers herbeigeführt werden, was ebenfalls zur Erleichterung des Einführ- und des sonstigen Verbindungsvorganges genutzt werden kann. Ein durch die konisch zulaufende Verjüngung gebildeter Verjüngungsabschnitt der Mantelwand kann längs der Fluidpassage kürzer ausgeführt sein als der von diesem Mantelwandabschnitt umgebene Einführabschnitt im Grundkörper. Eine solche Gestaltung führt zu einem entsprechenden Wandstärkenverlauf des Konnektors und damit zur Möglichkeit, eine Scharnierwirkung der Mantelwand beim Zusammensetzen des Konnektors mit fluidführenden Komponenten zu einer Fluidtransfer-Baugruppe auszunutzen.

Ein Mantelwand-Konuswinkel nach Anspruch 5 hat sich als vorteilhaft herausgestellt. Der Mantelwand-Konuswinkel kann im Bereich zwischen 35° und 45° liegen und kann insbesondere 40° betragen.

Passagenabschnitte unterschiedlichen Durchmessers nach Anspruch 6 können je nach Anwendungszweck des Konnektors Vorteile bieten. Trotz unterschiedlicher Passagen-Durchmesser kann die Verengungsstufe, über die der mindestens eine Einführabschnitt in die Fluidpassage übergeht, die gleiche absolute Durchmesserstufe überwinden. Hierdurch kann beispielsweise sichergestellt werden, dass die Fluidpassage als Anschlag für einen stirnseitigen Endbereich des eingeführten Verbindungsabschnittes der fluidführenden Komponente dient.

Drei Einführabschnitte nach Anspruch 7 können zum Beispiel in Form eines T- oder Y-Konnektors genutzt werden. Auch eine größere Anzahl von Einführabschnitten, beispielsweise vier oder mehr Einführabschnitte, ist möglich. Fluidpassagen innerhalb eines derartigen, mindestens drei Einführabschnitte aufweisenden Konnektors, können mehrere Passagen-Durchmesser aufweisen.

Die Vorteile einer Fluidtransfer-Baugruppe nach Anspruch 8 entsprechen denen, die vorstehend unter Bezugnahme auf den erfindungsgemäßen Konnektor bereits erläutert wurden. Die Fluidtransfer-Baugruppe kann Teil eines Abfüllsystems, insbesondere Teil eines medizinischen, pharmazeutischen und/oder lebensmitteltechnischen Abfüll- oder Entnahmesystems sein.

Ausführungsbeispiele der Erfindung werden nachfolgend anhand der Zeichnung näher erläutert. In dieser zeigen:
- Fig. 1: eine perspektivische Ansicht eines Konnektors zur fluiddichten Verbindung dreier fluidführender Komponenten;
- Fig. 2: eine innere Details preisgebende Ansicht des Konnektors nach Fig. 1; und
- Fig. 3 bis 14: in zu den Fig. 1 und 2 ähnlichen Darstellungen weitere Ausführungen von Konnektoren zur fluiddichten Verbindung zweier oder mehrerer fluidführender Komponenten.

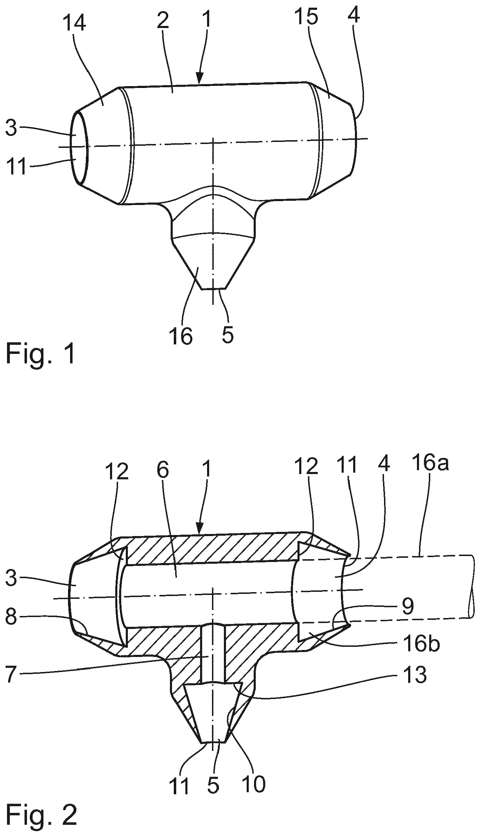

Ein in den Fig. 1 und 2 dargestellter Konnektor 1 dient in Form eines T-Konnektors zu fluiddichten Verbindung dreier fluidführender Komponenten, die in der Zeichnung nicht näher dargestellt sind. Bei den fluidführenden Komponenten kann es sich um Schläuche und/oder um Kanülen und/oder um Katheter und/oder um Abfüllnadeln handeln. Der Konnektor 1 ist aus Silikon gefertigt. Alternativ ist auch eine Fertigung aus Polyurethan möglich.

Der Konnektor 1 hat einen Konnektor-Grundkörper 2 aus Silikon sowie drei in diesem ausgeformte Einführabschnitte 3, 4, 5, die zum Einführen von jeweils einem endseitigen Verbindungsabschnitt der jeweiligen fluidführenden Komponente dienen. Die beiden einander gegenüberliegenden Einführabschnitte 3 und 4 sind über eine gerade und längs eines Dachschenkels des T-Konnektors 1 verlaufende Fluidpassage 6 miteinander verbunden. Zwischen dem dritten Einführabschnitt 5 und der Fluidpassage 6 verläuft eine weitere, engere Fluidpassage 7 längs eines Fußschenkels des T-Konnektors 1. Die engere Fluidpassage 7 mündet etwa zentral im Konnektor-Grundkörper 2 mittig in die weitere Fluidpassage 6 ein. Die Fluidpassage 7 trifft unter einem 90°-Winkel auf die Fluidpassage 6. Ein Durchmesserverhältnis zwischen der engeren Fluidpassage 7 und der weiteren Fluidpassage 6 beträgt etwa 1:3. Eine Fluidpassage zwischen den Einführabschnitten 3 und 5 verläuft unter einem 90°-Winkel zunächst über einen Abschnitt der weiteren Fluidpassage 6 und anschließend über die engere Fluidpassage 7. Entsprechend verläuft eine Fluidpassage zwischen den Einführabschnitten 4 und 5 zunächst über einen Abschnitt der weiteren Fluidpassage 6 und anschließend über die engere Fluidpassage 7.

Die Einführabschnitte 3 bis 5 erweitern sich zur jeweiligen Fluidpassage 6 und 7 innerhalb des Konnektor-Grundkörpers 2 nach innen hin jeweils über eine sich konisch erweiternde Innenwand 8, 9, 10. Ein Konuswinkel dieser Innenwand beträgt etwa 25°. Die Einführabschnitte 3, 4 erweitern sich, ausgehend jeweils von einer Einführöffnung 11 bis hin zu einer Verengungsstufe 12, über die die Einführabschnitte 3, 4 in die Fluidpassage 6 übergehen. Angrenzend zur Verengungsstufe 12 sind die Einführabschnitte 8, 9 im Durchmesser etwa 30 % größer als die Fluidpassage 6. Die Innenwand 10 des Einführabschnitts 5 erweitert sich ausgehend von ihrer Einführöffnung 11 hin zu einer Verengungsstufe 13. Angrenzend zur Verengungsstufe 13 hat der Einführabschnitt 5 etwa den doppelten Querschnitt der Fluidpassage 7. Trotz der unterschiedlichen Durchmesser der Fluidpassagen 6 und 7 überwinden die Verengungsstufen 12, 13 etwa die gleiche absolute Durchmesserstufe.

Die Einführabschnitte 3 bis 5 sind nach außen hin durch jeweils eine sich hin zu den Einführöffnungen 11 konisch zulaufend verjüngende Mantelwand 14, 15, 16 begrenzt. Ein Konuswinkel der Mantelwände 14 bis 16 ist größer als der Konuswinkel der Innenwände 8 bis 10 und beträgt bei der Ausführung nach den Fig. 1 und 2 etwa 40°.

Zusammen mit den drei nicht dargstellten fluidführenden Komponenten, die über den T-Konnektor 1 fluiddicht miteinander verbunden sind, stellt der T-Konnektor 1 eine Fluidtransfer-Baugruppe dar. Diese kann Bestandteil eines medizinischen, pharmazeutischen und/oder lebensmitteltechnischen Abfüll- oder Entnahmesystems sein.

Zur Herstellung der gesamten Fluidtransfer-Baugruppe wird der Konnektor-Grundkörper 2 zunächst mit einem Lösungsmittel behandelt, sodass dieser aufquillt. Dieses Aufquellen führt dazu, dass der Durchmesser der Einführöffnungen 11 der Einführabschnitte 3 bis 5 weiter wird als ein Außendurchmesser der in die Einführabschnitte 3 bis 5 einzuführenden Verbindungsabschnitte der fluidführenden Komponenten. Anschließend wird die jeweilige fluidführende Komponente in die Einführöffnung 11 des jeweiligen Einführabschnitts 3 bis 5 eingeführt. Dies ist beim T-Konnektor 1 am Beispiel eines Schlauchabschnitts 16a gestrichelt angedeutet, der in den Einführabschnitt 4 eingeschoben ist. Ein Außendurchmesser des Schlauchabschnitts 16a ist etwas größer als der Innendurchmesser der Fluidpassage 6, sodass der stirnseitige und in den Einführabschnitt 4 eingeschobene Verbindungsabschnitt des Schlauchabschnitts 16a an der Verengungsstufe 12 des Einführabschnitts 4 anstößt, sodass diese Verengungsstufe 12 dann auch als Anschlag für den Schlauchabschnitt 16a dient. Nach dem Einführen der fluidführenden Komponenten in die Einführöffnungen 11 des aufgequollenen Konnektor-Grundkörpers 2 schrumpft dieser durch Ausdampfen des Lösungsmittels. Klebstoff, der vor dem Einführen des Schlauchabschnitts 16a nahe des stirnseitigen Endbereichs außen auf diesen aufgebracht wurde, verteilt sich nun in einem aufgrund der Schrumpfung kleiner werdenden, keilförmigen Ringraum 16b, der nach innen durch den Schlauchabschnitt 16a, nach außen durch die Innenwand 9, in der Fig. 2 nach links hin durch die Verengungsstufe 12 und in der Fig. 2 nach rechts hin durch die Berandung der Einführöffnung 11 begrenzt ist. Aufgrund der Keilform des Ringraums 16b stellt dieser ein Reservoir für den sich im Ringraum 16b verteilenden Klebstoff dar. Aufgrund der Aufschrumpfung des Konnektor-Grundkörpers 2 auf die eingeführten Verbindungsabschnitte der Schlauchabschnitte, zum Beispiel des Schlauchabschnitts 16a, ergibt sich ein Fixieren des jeweiligen Einführabschnitts 3 bis 5 mit der jeweils eingeführten fluidführenden Komponente. Diese Fixierung ergibt sich hauptsächlich durch einen Reibschluss zwischen der Berandung der jeweiligen Einführöffnung 11 und einer Mantelwand des eingeführten Verbindungsabschnitts der fluidführenden Komponente, also beispielsweise des Schlauchabschnitts 16a. Die Fixierung bewirkt, dass die eingeführte fluidführende Komponente nicht unerwünscht während einer Trocknungs- beziehungsweise Aushärtezeit des Klebstoffes verrutscht.

Nach dem Aufquellen des Konnektor-Grundkörpers 2 und dem Einführen beispielsweise des Schlauchabschnitts 16a in den Einführabschnitt 4, aber vor dem Beginn des Schrumpfens des Konnektor-Grundkörpers 2 ist der Innendurchmesser der Berandung der Einführöffnung 11 mindestens 0,5 mm weiter als ein Außendurchmesser des Schlauchabschnitts 16a. Nach vollendeter Schrumpfung ergibt sich eine Presspassung des Schlauchabschnitts 16a im Bereich der Berandung der Einführöffnung 11. Der kräftefreie Innendurchmesser der Berandung 11 kann in diesem Fall exakt genau so groß sein wie der Außendurchmesser des Schlauchabschnitts 16a oder sogar geringfügig geringer sein. Durch den Schrumpfungshub und das vorgegebene Übermaß des Durchmessers der Berandung der Einführöffnung 11 im Vergleich zum Außendurchmesser des Verbindungsabschnitts der eingeführten fluidführenden Komponente vor dem Schrumpfungsvorgang können auch Produktionstoleranzen hinsichtlich des Innendurchmessers der Einführöffnungen 11 und/oder hinsichtlich des Außendurchmessers des Verbindungsabschnitts der einzuführenden fluidführenden Komponenten ausgeglichen werden.

Anstelle eines Weitens des Konnektor-Grundkörpers 2 über ein Aufquellen, wie vorstehend erläutert, kann auch ein mechanisches Weiten der Einführabschnitte 3 bis 5 des Grundkörpers 2 erfolgen. Ein solches mechanisches Weiten kann beispielsweise über eine Konushülse erfolgen, die in die Einführabschnitte 3 bis 5 des Grundkörpers 2 eingeführt wird.

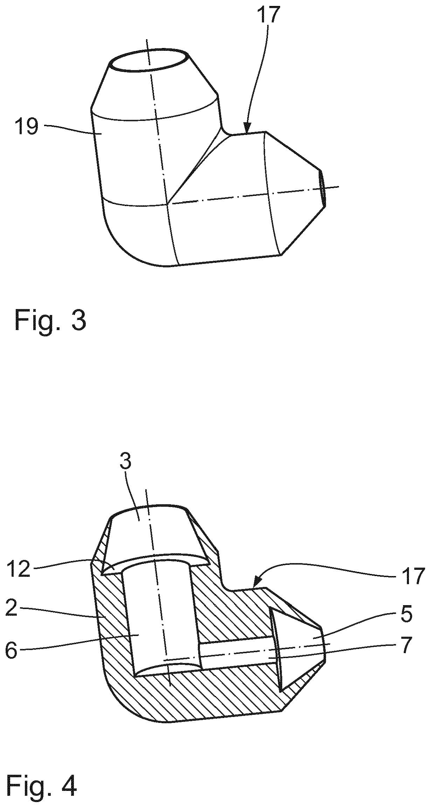

Anhand der Fig. 3 und 4 wird nachfolgend eine weitere Variante eines Konnektors 17 beschrieben. Komponenten, die denjenigen entsprechen, die vorstehend unter Bezugnahme auf die Fig. 1 und 2 bereits erläutert wurden, tragen die gleichen Bezugsziffern und werden nicht nochmals im Einzelnen diskutiert.

Der Konnektor 17 ist als L-Konnektor ausgeführt. Der L-Konnektor 17 hat genau zwei Einführabschnitte, nämlich die Einführabschnitte 3 und 5. Der Einführabschnitt 3 geht im Konnektor-Grundkörper 2 des L-Konnektors 17 über die Verengungsstufe 12 in die Fluidpassage 6 über, die als Sack-Passage ausgeführt ist. Nahe dem Boden dieser Sack-Passage mündet in die weitere Fluidpassage 6 die engere Fluidpassage 7 ein. Die Fluidpassage 7 verbindet auch beim L-Konnektor den Einführabschnitt 5 mit der weiteren Fluidpassage 6.

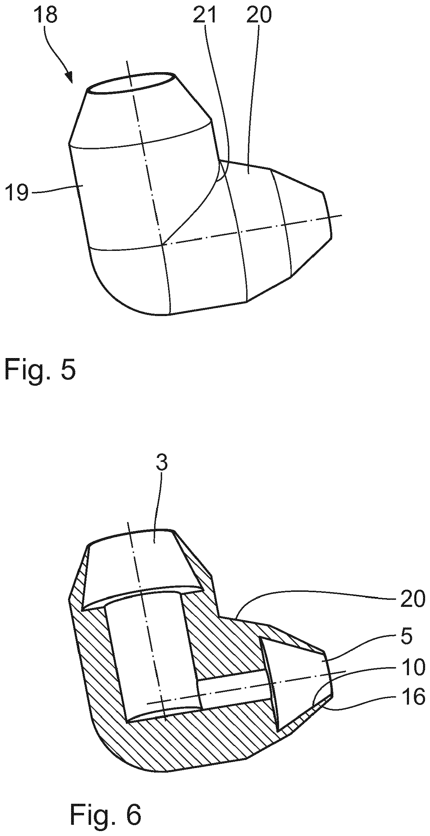

Anhand der Fig. 5 und 6 wird nachfolgend eine weitere Ausführung eines Konnektors 18 erläutert. Komponenten, die denjenigen entsprechen, die vorstehend unter Bezugnahme auf die Ausführungen nach den Fig. 1 bis 4 bereits erläutert wurden, tragen die gleichen Bezugsziffern und werden nicht nochmals im Einzelnen diskutiert.

Auch der Konnektor 18 ist wie der Konnektor 17 als L-Konnektor ausgeführt. Im Unterschied zum L-Konnektor 17 ist beim L-Konnektor 18 eine Mantelwand 19 des Konnektor-Grundkörpers 2 nicht längs den Fluidpassagen 6, 7 jeweils mit konstantem Durchmesser ausgeführt, sondern weist einen weiteren konischen Mantelwandabschnitt 20 auf, der sich zwischen der Mantelwand 16 des Einführabschnitts 5 und der Mantelwand 19 des Konnektor-Grundkörpers 2 nahe eines 90°-Knickbereichs 21 des Konnektor-Grundkörpers 2 konisch erweitert. Ein Konuswinkel des Mantelwandabschnitts 20 ist kleiner als der Konuswinkel der Mantelwand 16 des Einführabschnitts 5 und ist etwa so groß wie der Konuswinkel der Innenwand 10 des Einführabschnitts 5.

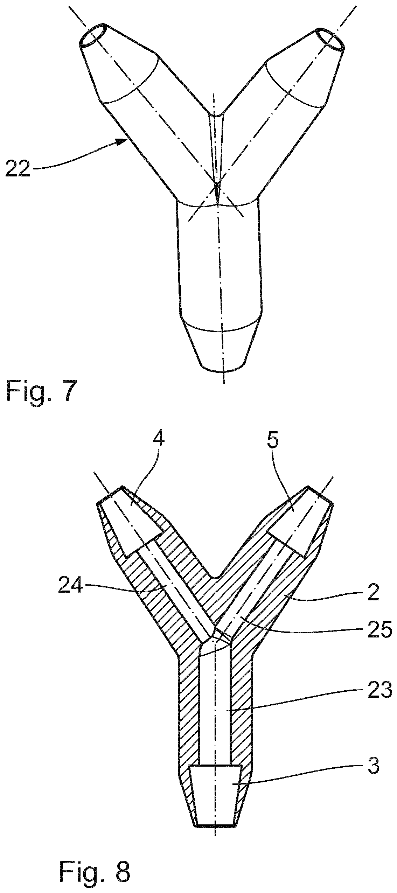

Anhand der Fig. 7 und 8 wird nachfolgend eine weitere Ausführung eines Konnektors 22 erläutert. Komponenten, die denjenigen entsprechen, die vorstehend unter Bezugnahme auf die Fig. 1 bis 6 bereits beschrieben wurden, tragen die gleichen Bezugsziffern und werden nicht nochmals im Einzelnen diskutiert.

Der Konnektor 22 ist als Y-Konnektor ausgeführt. Ausgehend vom Einführabschnitt 3, der in eine Haupt-Fluidpassage 23 innerhalb des Y-förmigen Konnektor-Grundkörpers 2 des Y-Konnektors 22 übergeht, verzweigt sich der Konnektor-Grundkörper 2 und endet in den beiden anderen Einführabschnitten 4, 5. Den Einführabschnitt 4 verbindet eine Neben-Fluidpassage 24 mit der Haupt-Fluidpassage 23. Entsprechen verbindet den Einführabschnitt 5 eine Neben-Fluidpassage 25 mit der Haupt-Fluidpassage 23. Die drei Fluidpassagen 23 bis 25 des Y-Konnektors 22 münden etwa zentral im Konnektor-Grundkörper 2 ineinander ein.

Die Haupt-Fluidpassage 23 hat etwa einen doppelt so großen Innendurchmesser wie die beiden Neben-Fluidpassagen 24, 25, deren Innendurchmesser der gleiche ist.

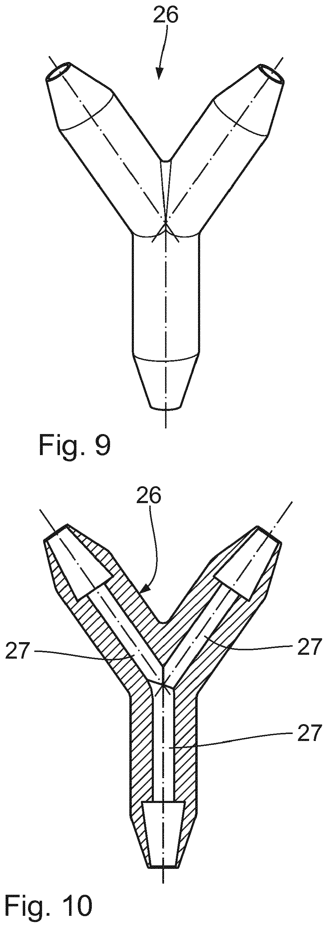

Anhand der Fig. 9 und 10 wird nachfolgend eine weitere Ausführung eines Konnektors 26 beschrieben. Komponenten, die denjenigen entsprechen, die vorstehend unter Bezugnahme auf die Fig. 1 bis 8 bereits erläutert wurden, tragen die gleichen Bezugsziffern und werden nicht nochmals im Einzelnen diskutiert.

Auch der Konnektor 26 ist als Y-Konnektor ausgeführt. Im Unterschied zum Y-Konnektor 22 nach den Fig. 7 und 8 sind beim Y-Konnektor 26 sämtliche Fluidpassagen 27 zwischen den Einführabschnitten 3, 4 und 5 mit gleicher Weite ausgeführt, haben also den gleichen Innendurchmesser.

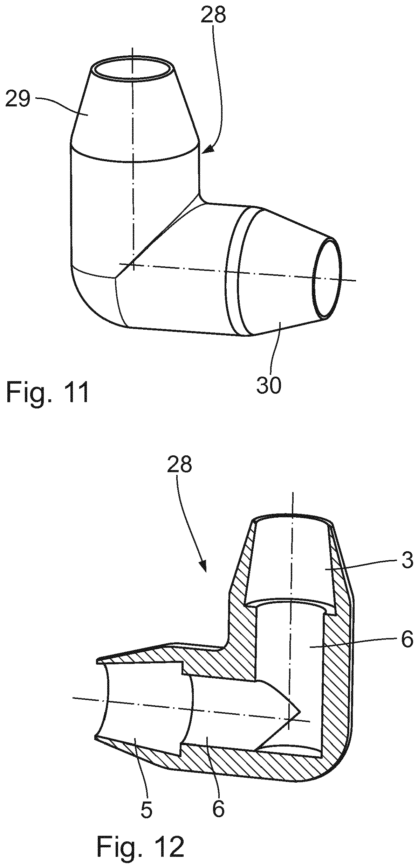

Anhand der Figuren 11 und 12 wird nachfolgend eine weitere Ausführung eines Konnektors 28 beschrieben. Komponenten, die denjenigen entsprechen, die vorstehend unter Bezug genommen auf die Figuren 1 bis 10 bereits erläutert wurden, tragen die gleichen Bezugsziffern und werden nicht nochmals im Einzelnen diskutiert.

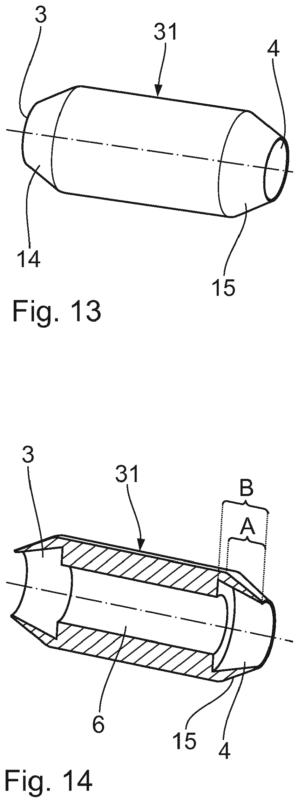

Der Konnektor 28, ist vergleichbar zu den Konnektoren 17 und 18, ein L-Konnektor. Im Unterschied zu den Konnektoren nach den Figuren 17 und 18 ist ein Übergang der Mantelwand in konische Mantelwandabschnitte 29, 30 als fließender Übergang ohne umlaufende Kante ausgeführt.
Beide Einführabschnitte 3 und 5 führen zu vergleichsweise weiten Fluidpassagen 6.
Anhand der Figuren 13 und 14 wird nachfolgend eine weitere Ausführung eines Konnektors 31 beschrieben. Komponenten, die denjenigen entsprechen, die vorstehend unter Bezugnahme auf die Figuren 1 bis 12 bereits erläutert wurden, tragen die gleichen Bezugsziffern und werden nicht nochmals im Einzelnen diskutiert.
Beim Konnektor 31 handelt es sich um einen geraden Konnektor mit zwei Einführabschnitten 3 und 4, die den Einführabschnitten 3 und 4 des T-Konnektors 1 nach den Figuren 1 und 2 entsprechen. Abgesehen davon, dass dem Konnektor 31 nach den Figuren 13 und 14 der Einführabschnitt 5 und die Fluidpassage 7 fehlt, entspricht der Konnektor 31 vom Aufbau her dem Konnektor 1.
Anhand der Figuren 13 und 14 wird noch eine Besonderheit der Ausgestaltung der sich konisch verjüngenden Mantelwände 14 und 15 erläutert, die in dieser Form auch bei den anderen, vorstehend beschriebenen Ausführungen vorliegt. Eine Länge A der sich konisch verjüngenden Mantelwandabschnitte 14, 15 ist längs der Fluidpassage 6 kürzer als eine Länge B der Einführabschnitte 3, 4. Dies ist am Beispiel des Mantelwandabschnitts 15 und des Einführabschnitts 4 in der Figur 14 zeichnerisch dargestellt.
Dieses Längenverhältnis B/A > 1 führt dazu, dass die Konnektoren im Bereich der Einführabschnitte einen entsprechenden Wandstärkenverlauf und damit eine definierte Stabilität haben, was bei der Fertigung einer Fluidtransfer-Baugruppe aus den Konnektoren und den Filuidführenden Komponenten genutzt werden kann.

## Patentansprüche

1. Konnektor (1; 17; 18; 22; 26; 28; 31) zur fluiddichten Verbindung mindestens zweier fluidführender Komponenten (16a),
- mit einem Konnektor-Grundkörper (2),
- mit mindestens zwei im Konnektor-Grundkörper (2) ausgeformten Einführabschnitten (3 bis 5) zum Einführen jeweils eines Verbindungsabschnittes der fluidführenden Komponente (16a),
-- wobei sich mindestens einer der Einführabschnitte (3 bis 5) zu mindestens einer Fluidpassage (6, 7; 23 bis 25; 27) des Konnektors (1; 17; 18; 22; 26; 28; 31) innerhalb des Konnektor-Grundkörpers (2) nach innen hin über eine sich konisch erweiternde Innenwand (8, 9, 10) des Konnektors (1; 17; 18; 22; 26; 28; 31) erweitert,
-- wobei die konische Erweiterung des mindestens einen Einführabschnittes (3 bis 5) sich ausgehend von einer Einführöffnung (11) des Einführabschnittes hin zu einer Verengungsstufe (12) des Konnektors (1; 17; 18; 22; 26; 28; 31) erstreckt,
---- wobei der mindestens eine Einführabschnitt (3 bis 5) über die Verengungsstufe (12) in die Fluidpassage (6, 7; 23 bis 25; 27) übergeht,
---- wobei der Innendurchmesser der Fluidpassage (6) so ausgebildet ist dass, im Gebrauch, der Außendurchmesser der in den Einführabschnitt (3 bis 5) eingeschobenen fluidführenden Komponente (16a) etwas größer als der Innendurchmesser der Fluidpassage (6) ist, sodass die Verengungsstufe (12) als Anschlag für die in den Einführabschnitt (3 bis 5) eingeschobene fluidführende Komponente (16a) dient.

2. Konnektor nach Anspruch 1, **dadurch gekennzeichnet, dass** sich alle der Einführabschnitte (3 bis 5) zu einer Fluidpassage (6, 7; 23 bis 25; 27) innerhalb des Konnektor-Grundkörpers (2) nach innen hin erweitern und über eine Verengungsstufe (12, 13) in die Fluidpassage (6, 7; 23 bis 25; 27) übergehen.

3. Konnektor nach Anspruch 1 oder 2, **gekennzeichnet durch** einen Konuswinkel des mindestens einen sich nach innen erweiternden Einführabschnitts (3 bis 5), der im Bereich zwischen 10° und 40° liegt.

4. Konnektor nach einem der Ansprüche 1 bis 3, **dadurch gekennzeichnet, dass** mindestens einer der Einführabschnitte (3 bis 5) eine nach außen, also von der inneren Fluidpassage (6, 7; 23 bis 25; 27) weg, sich konisch zulaufend verjüngende Mantelwand (14 bis 16) aufweist.

5. Konnektor nach Anspruch 4, **gekennzeichnet durch** einen Konuswinkel der mindestens einen sich nach außen verjüngenden Mantelwand (14 bis 16), der im Bereich zwischen 25° und 55° liegt.

6. Konnektor nach einem der Ansprüche 1 bis 5, **dadurch gekennzeichnet, dass** die Fluidpassage Passagenabschnitte (6, 7) unterschiedlichen Durchmessers aufweist.

7. Konnektor (1; 22, 26) nach einem der vorstehenden Ansprüche, **gekennzeichnet durch** drei Einführabschnitte (3 bis 5) zum Einführen jeweils eines Verbindungsabschnittes der fluidführenden Komponente (16a).

8. Fluidtransfer-Baugruppe,
- mit mindestens einem Konnektor (1; 17; 18; 22; 26) nach einem der Ansprüche 1 bis 7,
- mit mindestens zwei fluidführenden Komponenten (16a), die über den Konnektor (1; 17; 18; 22; 26) fluiddicht miteinander verbunden sind.

## Claims

1. Connector (1; 17; 18; 22; 26; 28; 31) for fluid-tight connection of at least two fluid-carrying components (16a), comprising
- a connector base body (2);
- at least two insertion sections (3 to 5) formed in the connector base body (2) for inserting a respective connection section of the fluid-carrying component (16a),
-- wherein at least one of the insertion sections (3 to 5) widens inwardly in the connector base body (2) towards at least one fluid passage (6, 7; 23 to 25; 27) of the connector (1; 17; 18; 22; 26; 28; 31) via a conically widening inner wall (8, 9, 10) of the connector (1; 17; 18; 22; 26; 28; 31),
-- wherein the conical widening of the at least one insertion section (3 to 5) extends from an insertion opening (11) of the insertion section towards a constriction (12) of the connector (1; 17; 18; 22; 26; 28; 31),
--- wherein the at least one insertion section (3 to 5) transitions into the fluid passage (6, 7; 23 to 25; 27) via the constriction (12),
--- wherein the internal diameter of the fluid passage (6) is configured such that in use, the external diameter of the fluid-carrying component (16a) inserted into the insertion section (3 to 5) is slightly greater than the internal diameter of the fluid passage (6) so the constriction (12) acts as a stop for the fluid-carrying component (16a) inserted into the insertion section (3 to 5).

2. Connector according to claim 1, **characterised in that** all of the insertion sections (3 to 5) widen inwardly in the connector base body (2) towards a fluid passage (6, 7; 23 to 25; 27) and transition into the fluid passage (6, 7; 23 to 25; 27) via a constriction (12, 13).

3. Connector according to claim 1 or 2, **characterised by** a cone angle of the at least one inwardly widening insertion section (3 to 5), said cone angle being in the range of between 10° and 40°.

4. Connector according to any one of claims 1 to 3, **characterised in that** at least one of the insertion sections (3 to 5) has a circumferential wall (14 to 16) that tapers conically towards the outside, in other words away from the inner fluid passage (6, 7; 23 to 25; 27).

5. Connector according to claim 4, **characterised by** a cone angle of the at least one outwardly tapering circumferential wall (14 to 16), said cone angle being in the range of between 25° and 55°.

6. Connector according to any one of claims 1 to 5, **characterised in that** the fluid passage comprises passage sections (6, 7) of various diameters.

7. Connector (1; 22, 26) according to any one of the preceding claims, **characterised by** three insertion sections (3 to 5) for inserting a respective connection section of the fluid-carrying component (16a).

8. Fluid transfer assembly comprising
- at least one connector (1; 17; 18; 22; 26) according to any one of claims 1 to 7.
- at least two fluid-carrying components (16a) that are connected to each other in a fluid-tight manner by means of the connector (1; 17; 18; 22; 26).

## Revendications

1. Connecteur (1 ; 17 ; 18 ; 22 ; 26 ; 28 ; 31) pour le raccordement étanche aux fluides d'au moins deux composants conducteurs de fluide (16a),
- avec un corps de base (2) de connecteur,
- avec au moins deux segments d'insertion (3 à 5) formés dans le corps de base (2) de connecteur pour l'insertion d'un segment de connexion correspondant du composant conducteur de fluide (16a),
-- dans lequel au moins un des segments d'insertion (3 à 5) s'élargit intérieurement vers au moins un passage de fluide (6, 7 ; 23 à 25 ; 27) du connecteur (1 ; 17 ; 18 ; 22 ; 26 ; 28 ; 31) à l'intérieur du corps de base (2) de connecteur par une paroi intérieure (8, 9, 10) du connecteur (1 ; 17 ; 18 ; 22 ; 26 ; 28 ; 31), laquelle s'évase en cône,
--- dans lequel l'évasement conique dudit au moins un segment d'insertion (3 à 5) s'étend à partir d'une ouverture d'insertion (11) du segment d'insertion jusqu'à un épaulement de rétrécissement (12) du connecteur (1 ; 17 ; 18 ; 22 ; 26 ; 28 ; 31),
---- dans lequel ledit au moins un segment d'insertion (3 à 5) se prolonge par le passage de fluide (6, 7 ; 23 à 25 ; 27) via l'épaulement de rétrécissement (12),
---- dans lequel le diamètre intérieur du passage de fluide (6) est prévu de telle manière que lors de l'utilisation, le diamètre extérieur du composant conducteur de fluide (16a) introduit dans le segment d'insertion (3 à 5) est légèrement supérieur au diamètre intérieur du passage de fluide (6), si bien que l'épaulement de rétrécissement (12) sert de butée pour le composant conducteur de fluide (16a) introduit dans le segment d'insertion (3 à 5).

2. Connecteur selon la revendication 1, **caractérisé en ce que** tous les segments d'insertion (3 à 5) s'élargissent intérieurement vers un passage de fluide (6, 7 ; 23 à 25 ; 27) à l'intérieur du corps de base (2) de connecteur et se prolongent par le passage de fluide (6, 7 ; 23 à 25 ; 27) via un épaulement de rétrécissement (12, 13).

3. Connecteur selon la revendication 1 ou 2, **caractérisé par** un angle de conicité dudit au moins un segment d'insertion (3 à 5) s'élargissant intérieurement compris dans une plage située entre 10° et 40°.

4. Connecteur selon l'une des revendications 1 à 3, **caractérisé en ce qu'**au moins un des segments d'insertion (3 à 5) présente une paroi périphérique (14 à 16) s'amincissant coniquement vers l'extérieur, autrement dit en s'éloignant du passage de fluide intérieur (6, 7 ; 23 à 25 ; 27).

5. Connecteur selon la revendication 4, **caractérisé par** un angle de conicité de ladite au moins une paroi périphérique (14 à 16) s'amincissant vers l'extérieur compris dans une plage située entre 25° et 55°.

6. Connecteur selon l'une des revendications 1 à 5, **caractérisé en ce que** le passage de fluide comprend des segments de passage (6, 7) de diamètres différents.

7. Connecteur (1 ; 22, 26) selon l'une des revendications précédentes, **caractérisé par** trois segments d'insertion (3 à 5) pour l'introduction d'un segment de connexion correspondant du composant conducteur de fluide (16a).

8. Unité de transfert de fluide
- avec au moins un connecteur (1 ; 17 ; 18 ; 22 ; 26) selon l'une des revendications 1 à 7,
- avec au moins deux composants conducteurs de fluide (16a) raccordés de manière étanche aux fluides par le connecteur (1 ; 17 ; 18 ; 22 ; 26).
